# EUROPEAN PATENT APPLICATION

(11) **EP 1 648 077 A1**
(43) Date of publication of application: **19.04.2006**
(21) Application number: 04748135.3
(22) Date of filing: 22.07.2004
(51) Int. Cl.: H02K 16/02

(54) **STEERING DEVICE FOR VEHICLE**

(30) Priority: 23.07.2003 JP 2003200687
(71) Applicant: Koyo Seiko Co., Ltd., Osaka 542-0081 (JP)
(72) Inventor: UENO, Hiroshi, Chuo-ku, Osaka-shi, Osaka 5420081 (JP)
(74) Representative: Steil, Christian
(86) International application number: PCT/JP2004/010975
(87) International publication number: WO 2005/008864

(57) **Abstract**

An automotive steering device (1) includes an electric motor (12) which generates a steering assist force. The electric motor (12) includes a stator (22) surrounding a rotation shaft (13), and first and second rotors (18, 19) rotatable together with the rotation shaft (13). The stator (22) includes a plurality of cores (25A-25D) elongated parallel to an axis of the rotation shaft (13). An electric current is caused to flow through coils (26A-26D) wound around the respective cores (25A-25D), whereby the cores (25A-25D) are each formed with first and second magnetic poles (27A-27D, 28A-28D) having opposite polarities. The first and second magnetic poles (27A-27D, 28A-28D) are disposed longitudinally (L) opposite to each other with respect to the corresponding cores (25A-25D). As the rotation shaft (13) is rotated, a third magnetic pole (20n) of the first rotor (18) and a fourth magnetic pole (21s) of the second rotor (19) are respectively brought into opposed relation to the first and second magnetic poles (27A-27D, 28A-28D) of the cores (25A-25D) in the same phase. Magnetic fluxes (J) interlink with the coils (26A-26D) around the cores (25A-25D) in predetermined directions longitudinally (L) of the cores (25A-25D).

## Description

### TECHNICAL FIELD

The present invention relates to an automotive steering device for an automobile or the like.

### BACKGROUND ART

Automotive steering devices are broadly classified into a link type in which a steering member such as a steering wheel is mechanically coupled to a steering mechanism via a transmission member such as a steering shaft or the like and a steer-by-wire type in which the steering member is not mechanically coupled to the steering mechanism.

Automotive steering devices of the former link type include an electric power steering device including an electric motor which generates a steering assist force according to operation of the steering member. A DC motor is typically used as the electric motor for the electric power steering device (see, for example, Japanese Unexamined Patent Publication No. 7-137644 laid open on May 30, 1995 and Japanese Unexamined Patent Publication No. 2002-153019 laid open on May 24, 2002).

Automotive steering devices of the latter steer-by-wire type include an automotive steering device which includes a steering shaft mechanically separated from a steering mechanism and an electric motor provided as a steering actuator in the middle of the steering mechanism. In this automotive steering device, a control section including a microprocessor controls steerable vehicle wheels by driving the electric motor on the basis of a difference between a steering angle of the steering mechanism and a target steering angle defined by the steering member so that the steering angle becomes close to the target steering angle.

In the automotive steering device described above, another electric motor is provided as a counter force actuator for applying an operation counter force to the steering member according to an operation torque. A DC motor is typically used as this electric motor.

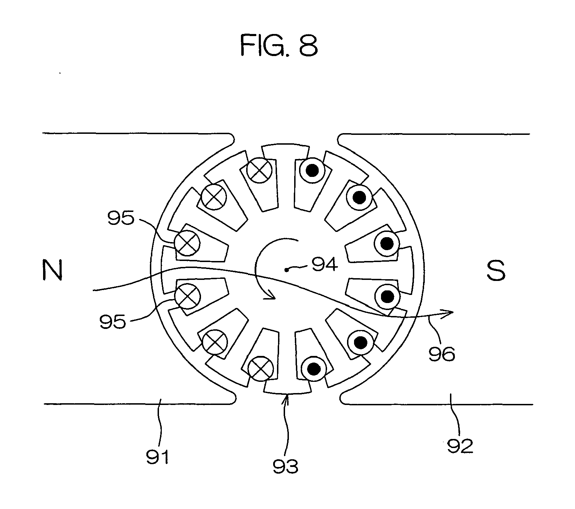

Thus, the automotive steering devices of the former and latter types employ the DC motors. An exemplary DC motor of this kind is shown in Fig. 8.

Referring to Fig. 8, a rotor 93 is rotatably provided between a pair of magnets 91, 92 disposed in opposed relation. The rotor 93 is rotated about a rotation axis 94 extending perpendicularly to a direction along which the magnets 91, 92 are opposed to each other. Coils 95 (partly shown) are arranged circumferentially of the rotor 93.

When the rotor 93 is rotated, the coils 95 move across magnetic fluxes 96 (partly shown) occurring between the magnets 91 and 92. As a result, the direction of the magnetic fluxes 96 is changed with respect to the coils 95, resulting in unevenness of the torque.

This brings about a problem such that a steering feeling is deteriorated in the automotive steering device of either of the aforesaid types.

It is therefore an object of the present invention to provide an automotive steering device which ensures an improved steering feeling.

### DISCLOSURE OF THE INVENTION

According to one aspect of the present invention to achieve the aforesaid object, there is provided an automotive steering device including an electric motor which generates a steering assist force. The electric motor includes a rotation shaft, a stator surrounding the rotation shaft, and first and second rotors rotatable together with the rotation shaft. The stator includes a plurality of cores arranged circularly about the rotation shaft and elongated parallel to an axis of the rotation shaft, and coils respectively wound around the cores. An electric current is caused to flow through the coils around the respective cores, whereby the cores are each formed with first and second magnetic poles disposed opposite to each other longitudinally thereof and having opposite polarities. The first rotor has a third magnetic pole having a polarity opposite to the polarity of the first magnetic pole, and the second rotor has a fourth magnetic pole having a polarity opposite to the polarity of the second magnetic pole. As the rotation shaft is rotated, the third and fourth magnetic poles are respectively brought into opposed relation to the first and second magnetic poles of the cores in the same phase. As a result, magnetic fluxes interlink with the coils around the cores in predetermined directions longitudinally of the cores.

According to this inventive aspect, the magnetic fluxes interlink with the coils in the predetermined directions, while changing the number of magnetic fluxes in the respective cores. Therefore, a loss of the magnetic fluxes can be suppressed as compared with the case where the direction of the interlinkage of the magnetic fluxes with the coils is changed. As a result, the unevenness of the torque of the electric motor can be suppressed. Therefore, unnatural fluctuation of the steering assist force applied from the electric motor is suppressed so that the steering feeling can be further improved.

### BRIEF DESCRIPTION OF THE DRAWINGS

Fig. 1 is a schematic diagram illustrating the schematic construction of an automotive steering device according to one embodiment of the present invention;
Fig. 2 is a sectional view of an electric motor;
Fig. 3A is a sectional view taken along a line 3A-3A in Fig. 2, and Fig. 3B is a sectional view taken along a line 3B-3B in Fig. 2;
Figs. 4A, 4B and 4C are schematic diagrams for explaining an operation of the electric motor in relation to a first rotor;
Figs. 5A, 5B and 5C are schematic diagrams for explaining an operation of the electric motor in relation to a second rotor;
Fig. 6 is a graph illustrating changes of counter electromotive forces over time with the counter electromotive forces and the time being plotted as ordinate and abscissa, respectively;
Fig. 7 is a schematic sectional view illustrating another embodiment of the present invention; and
Fig. 8 is a schematic diagram illustrating a DC motor of a conventional automotive steering device.

### BEST MODE FOR CARRYING OUT THE INVENTION

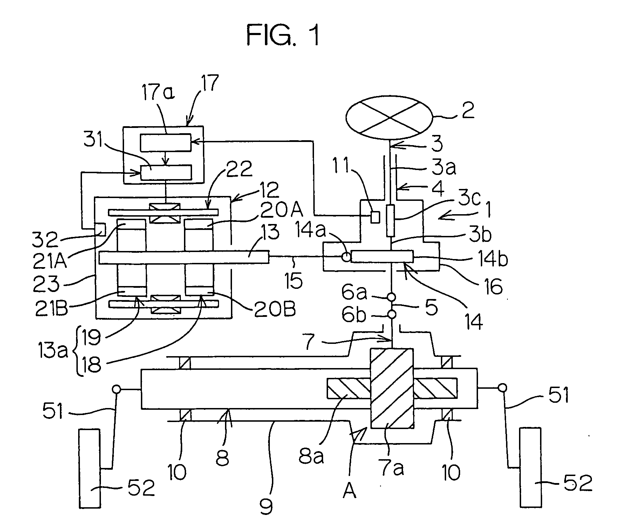

An automotive steering device according to one embodiment of the present invention will hereinafter be described with reference to the attached drawings. Fig. 1 is a schematic diagram illustrating the schematic construction of this automotive steering device.

The automotive steering device 1 includes a steering shaft 3 coupled to a steering member 2 such as a steering wheel, and a steering column 4 rotatably supporting the steering shaft 3 therein.

The automotive steering device 1 includes an intermediate shaft 5 coupled to the steering shaft 3 via a universal joint 6a, a pinion shaft 7 coupled to the intermediate shaft 5 via a universal joint 6b, and a rack shaft 8 as a steerable shaft extending transversely of a motor vehicle and having rack teeth 8a meshed with pinion teeth 7a provided around the pinion shaft 7. A steering mechanism A of a rack-and-pinion mechanism is constituted by the pinion shaft 7 and the rack shaft 8.

The steering shaft 3 is divided into an input shaft 3a coupled to the steering member 2 and an output shaft 3b coupled to the pinion shaft 7. The input and output shafts 3a, 3b are coaxially coupled to each other in a relatively rotatable manner via a torsion bar 3c.

The rack shaft 8 is supported in a linearly reciprocally movable manner in a housing 9 fixed to a vehicle body via a plurality of bearings 10. Both ends of the rack shaft 8 project laterally of the housing 9, and are respectively coupled to tie rods 51. The tie rods 51 are respectively coupled to corresponding vehicle wheels 52 via corresponding knuckle arms (not shown).

When the steering member 2 is operated to rotate the steering shaft 3, the rotation of the steering shaft 3 is converted into linear movement of the rack shaft 8 extending transversely of the motor vehicle by the pinion teeth 7a and the rack teeth 8a. Thus, the steering of the steerable vehicle wheels 52 is achieved.

The automotive steering device 1 is provided as an electric power steering device, which is adapted to provide a steering assist force according to a steering resistance occurring when a steering operation is performed.

That is, the automotive steering device 1 includes a torque sensor 11 provided in association with the steering shaft 3 for detecting a steering torque, an electric motor 12 for generating the steering assist force, and a reduction gear mechanism 14 which decelerates the rotation of a rotation shaft 13 of the electric motor 12 and transmits the rotation to the steering mechanism A. The reduction gear mechanism 14 includes a driving gear 14a such as a worm coupled to the rotation shaft 13 of the electric motor 12 via a joint 15, and a driven gear 14b such as a worm wheel meshed with the driving gear 14a and coupled to the output shaft 3b of the steering shaft 3 in a co-rotatable manner.

The automotive steering device 1 includes a housing 16 which accommodates the torque sensor 11 and the reduction gear mechanism 14 and supports the electric motor 12, and an ECU (electronic control unit) 17 which controls the driving of the electric motor 12. The ECU 17 includes a control center 17a.

The ECU 17 controls the driving of the electric motor 12 via a driving circuit 31 on the basis of a torque detection result and the like applied from the torque sensor 11 and a vehicle speed detection result applied from a vehicle sensor not shown. The output rotation of the electric motor 12 is decelerated and transmitted to the output shaft 3b of the steering shaft 3 by the reduction gear mechanism 14, and then converted into the linear movement of the rack shaft 8 via the pinion shaft 7 to assist the steering operation.

In this embodiment, the electric motor 12 is a single opposed magnetic pole induction motor to be described later. When the rotation shaft 13 is rotated, magnetic fluxes generated between first permanent magnets 20A, 20B of a first rotor 18 and second permanent magnets 21A, 21B of a second rotor 19 are constantly directed in the same direction in a stator 22, and continuously changed in flux interlinkage number. Thus, the electric motor 12 is very smoothly rotated without torque unevenness to provide a torque ranging from a low level to a very high level.

Therefore, the automotive steering device 1 utilizes a higher torque of the electric motor 12 to accelerate the steering start-up operation of the vehicle wheels 52. For example, it is possible to generate a steering assist force sufficient to follow a driver's abrupt steering operation for sharp steering. This improves the steering feeling.

Since a higher torque can be provided, the reduction gear ratio of the reduction gear mechanism 14 can be reduced, or the provision of the reduction gear mechanism 14 can be omitted. In this respect, the steering start-up operation of the vehicle wheels 52 can be accelerated. Further, a higher torque can be provided even if the rotation shaft 13 of the electric motor 12 is rotated at a relatively low speed. Therefore, the steering assist force can be provided in a short period of time after the standstill of the electric motor 12. Thus, the steering feeling can be further improved.

Since the torque unevenness is reduced, it is possible to suppress the unnatural fluctuation of the steering assist force generated from the electric motor 12 and, hence, the fluctuation of the counter force received by the driver during the steering operation. Therefore, the steering feeling can be further improved.

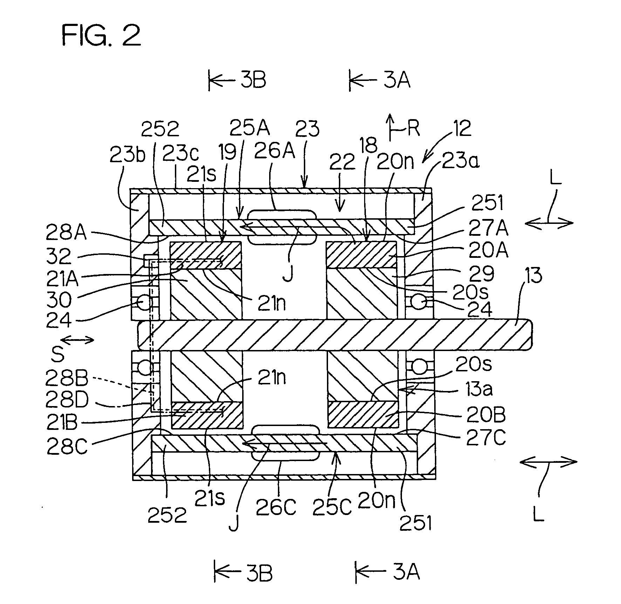

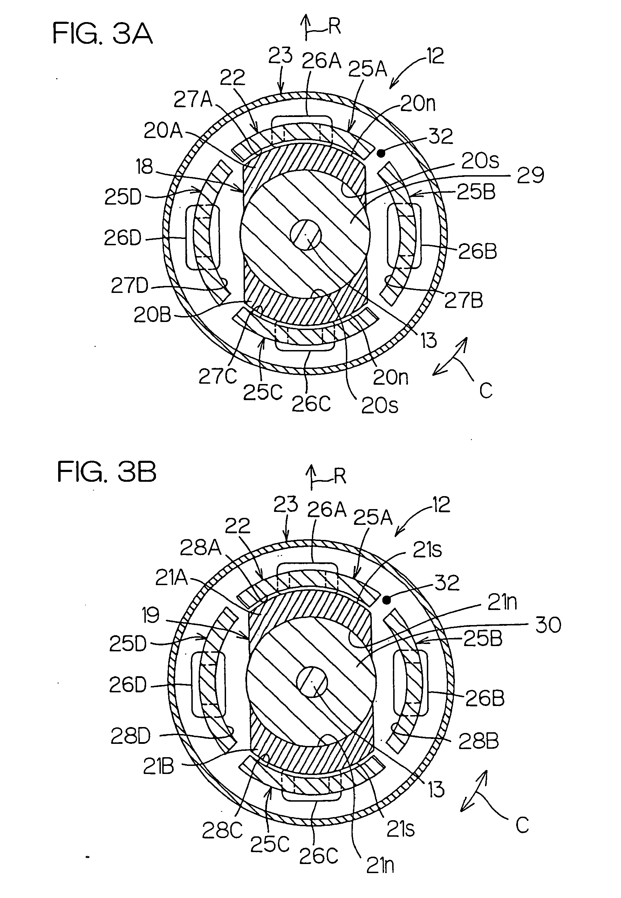

Reference is next made to Figs. 2, 3A and 3B. The electric motor 12 includes a casing 23 as a stationary member, the rotation shaft 13, the stator 22, and a rotor 13a. The casing 23 is tubular and supported by the housing 16 (see Fig. 1). The rotation shaft 13 is rotatably supported by the casing 23 via a plurality of bearings 24. The stator 22 is annular, and surrounds the rotation shaft 13. The rotor 13a includes the first and second rotors 18, 19 which are fixed to the rotation shaft 13 in a co-rotatable manner. A major part of the rotation shaft 13, the stator 22 and the first and second rotors 18, 19 are accommodated in the casing 23.

The rotation shaft 13 is composed of a nonmagnetic material. One end portion of the rotation shaft 13 extends out of the casing 23, and is connected to the steering shaft 3 in a drivable manner via the joint 15. The casing 23 has a pair of flanges 23a, 23b, and a hollow cylindrical cover 23c.

The stator 22 includes a plurality of cores (e.g., four cores 25A, 25B, 25C, 25D) arranged circularly about the rotation shaft 13, andapluralityof coils (e.g., four coils 26A, 26B, 26C, 26D).

The cores 25A, 25B, 25C, 25D are fixedly supported by the casing 23. The cores 25A, 25B, 25C, 25D are arranged equidistantly circularly about the rotation shaft 13, and equally slightly spaced from each other.

The cores 25A, 25B, 25C, 25D are elongate members having the same shape and each extending parallel to an axial direction S of the rotation shaft 13. As shown in Figs. 3A and 3B, the cores 25A, 25B, 25C, 25D each have an arcuate cross section extending about the rotation shaft 13. For example, the cores 25A, 25B, 25C, 25D are each composed of a single metal bar.

Coils 26A, 26B, 26C, 26D are respectively wound around longitudinally (L) middle portions of the cores 25A, 25B, 25C, 25D.

Referring to Fig. 2, the core 25A has first and second magnetic poles 27A and 28A which are respectively formed at longitudinally (L) opposite ends 251 and 252 thereof. The core 25C has first and second magnetic poles 27C and 28C which are respectively formed at longitudinally (L) opposite ends 251 and 252 thereof.

Similarly, the core 25B has first and second magnetic poles 27B and 28B (see Figs. 3A and 3B) which are respectively formed at longitudinally (L) opposite ends 251 and 252 (not shown) thereof. The core 25D has first and second magnetic poles 27D and 28D (see Figs. 3A and 3B) which are respectively formed at longitudinally (L) opposite ends 251 and 252 (not shown) thereof.

In the respective cores 25A, 25B, 25C, 25D, the first magnetic poles 27A, 27B, 27C, 27D and the second magnetic poles 28A, 28B, 28C, 28D are magnetized with opposite magnetic polarities.

The coils 26A, 26B, 26C, 26D arranged circularly (C) about the rotation shaft 13 are alternately wound in opposite directions. For example, the two coils 26A, 26C are wound clockwise, and the two coils 26B, 26D are wound counterclockwise in Fig. 3A.

The first rotor 18 includes the plural first permanent magnets 20A, 20B and an intervention member 29. The first permanent magnets 20A, 20B are fixed to the rotation shaft 13 via the intervention member 29, and arranged circumferentially (C) evenly about the rotation shaft 13. The first permanent magnets 20A, 20B have the same arcuate shape. The first permanent magnets 20A, 20B each have a third magnetic pole 20n and a fifth magnetic pole 20s which have opposite magnetic polarities. The third magnetic poles 20n have anN-polarity, and are located radially (R) outward of the rotation shaft 13.

The second rotor 19 includes the plural second permanent magnets 21A, 21B and an intervention member 30. The second permanent magnets 21A, 21B are fixed to the rotation shaft 13 via the intervention member 30, and arranged circumferentially (C) evenly about the rotation shaft 13. The second permanent magnets 21A, 21B have the same arcuate shape. The second permanent magnets 21A, 21B each have a fourth magnetic pole 21s and a sixth magnetic pole 21n which have opposite magnetic polarities. The fourth magnetic poles 21s each have a polarity opposite to the polarity of the third magnetic poles 20n. That is, the fourth magnetic poles 21s each have an S-polarity, and are located radially (R) outward of the rotation shaft 13. The number of the second permanent magnets 21A, 21B is equal to the number of the first permanent magnets 20A, 20B of the first rotor 18.

The third magnetic poles 20n of the first rotor 18 are arranged so as to be sequentially brought into opposed relation to the first magnetic poles 27A, 27B, 27C, 27D of the stator 22 as the rotation shaft 13 is rotated. Similarly, the fourth magnetic poles 21s of the second rotor 19 are arranged so as to be sequentially brought into opposed relation to the second magnetic poles 28A, 28B, 28C, 28D of the stator 22 as the rotation shaft 13 is rotated.

The third magnetic poles 20n of the first rotor 18 and the fourth magnetic poles 21s of the second rotor 19 are located at the same angular positions circumferentially (C) of the rotation shaft 13 (i.e., in the same phase as during the rotation of the rotation shaft 13).

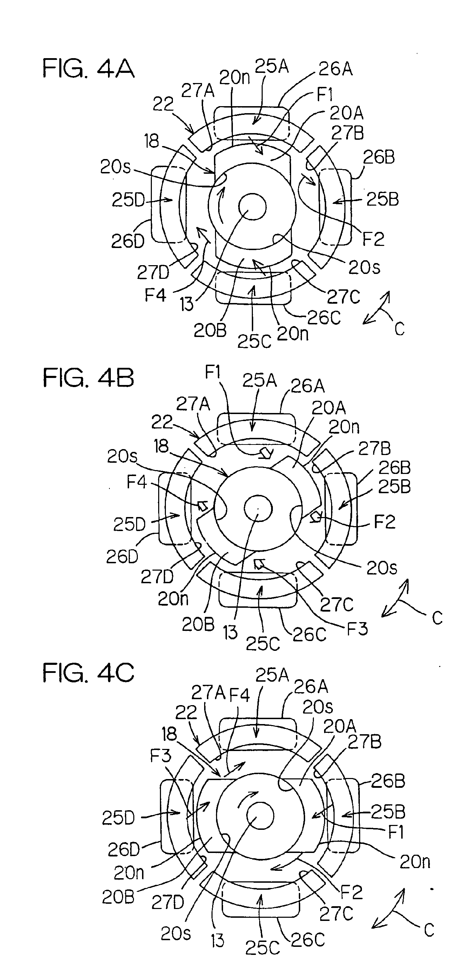

When the third magnetic poles 20n of the first rotor 18 are respectivelybrought into radially (R) opposed relation to the first magnetic poles 27A, 27C of the stator 22 with the intervention of small air gaps during the rotation of the rotation shaft 13 as shown in Fig. 4A, the fourth magnetic poles 21s of the second rotor 19 are respectively brought into radially (R) opposed relation to the second magnetic poles 28A, 28C of the stator 22 with the intervention of small air gaps as shown in Fig. 5A.

Similarly, when the third magnetic poles 20n of the first rotor 18 are respectivelybrought into radially (R) opposed relation to the first magnetic poles 27B, 27D of the stator 22 with the intervention of small air gaps during the rotation of the rotation shaft 13 as shown in Fig. 4C, the fourth magnetic poles 21s of the second rotor 19 are respectively brought into radially (R) opposed relation to the second magnetic poles 28B, 28D of the stator 22 with the intervention of small air gaps as shown in Fig. 5C.

Referring again to Fig. 1, the control section 17 functions as driving means for driving the electric motor 12, and includes a driving circuit 31 for properly energizing the coils 26A, 26B, 26C, 26D of the stator 22 under control of the control center 17a, and a single position sensor 32 which detects rotation angular positions of the first and second rotors 18, 19 with respect to the stator 22. Alternatively, a plurality of position sensors 32 may be provided.

The driving circuit 31 includes a first energization circuit not shown which causes an electric current to flow through the coils 26A, 26B, 26C, 26D in a first direction, a second energization circuit not shown which causes an electric current to flow through the coils 26A, 26B, 26C, 26D in a second direction opposite to the first direction, and at least one switch functioning as switching means for switching between the first and second energization circuits on the basis of a position detection signal applied from the position sensor 32.

The coils 26A, 26B, 26C, 26D are connected in series in this order, and further connected to a DC power source via the switch, whereby the first and second energization circuits are selectively established.

With the switch being switched to the first energization circuit, the electric current from the DC power source flows through the coils 26A, 26C in one rotational direction around the cores 25A, 25C, and flows through the coils 26B, 26D in the other rotational direction around the cores 25B, 25D in Fig. 4A.

With the switch being switched to the second energization circuit, the electric current from the DC power source flows through the coils 26A, 26C in the other rotational direction around the cores 25A, 25C, and flows through the coils 26B, 26D in the one rotational direction around the cores 25B, 25D.

Referring to Figs. 4A to 4C and Figs. 5A to 5C, an operation to be performed by the control section 17 when the rotation shaft 13 is rotated clockwise will hereinafter be described.

As shown in Figs. 4A and 4B, the third magnetic poles 20n of the first permanent magnets 20A, 20B of the first rotor 18 are respectively moved away from the first magnetic poles 27A, 27C of the stator 22 toward the first magnetic poles 27B, 27D circumferentially (C) adjacent to the first magnetic poles 27A, 27C about the rotation shaft 13 during the rotation of the rotation shaft 13.

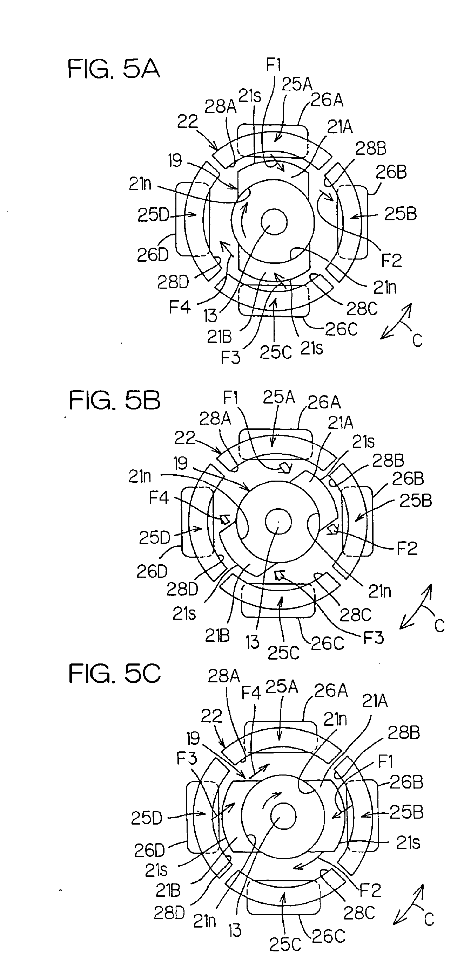

At the same time, the fourth magnetic poles 21s of the second permanent magnets 21A, 21B of the second rotor 19 are respectively moved away from the second magnetic poles 28A, 28C of the stator 22 toward the second magnetic poles 28B, 28D circumferentially (C) adjacent to the second magnetic poles 28A, 28C about the rotation shaft 13 as shown in Figs. 5A and 5B.

That is, the electric current is supplied to the coil 26A around the core 25A so as to generate a repulsive force F1 between the first magnetic pole 27A of the core 25A and the third magnetic pole 20n of the first permanent magnet 20A of the first rotor 18 as shown in Figs. 4A and 4B and to generate a repulsive force F1 between the second magnetic pole 28A of the core 25A and the fourth magnetic pole 21s of the second permanent magnet 21A of the second rotor 19 as shown in Figs. 5A and 5B. At the same time, the electric current is supplied to the coil 26B around the core 25B so as to generate an attractive force F2 between the first magnetic pole 27B of the core 25B and the third magnetic pole 20n of the first permanent magnet 20A of the first rotor 18 and to generate an attractive force F2 between the second magnetic pole 28B of the core 25B and the fourth magnetic pole 21s of the second permanent magnet 21B of the second rotor 19 as shown in Figs. 4A and 5A.

Further, the electric current is supplied to the coil 26C around the core 25C so as to generate a repulsive force F3 between the first magnetic pole 27C of the core 25C and the third magnetic pole 20n of the first permanent magnet 20B of the first rotor 18 and to generate a repulsive force F3 between the second magnetic pole 28C of the core 25C and the fourth magnetic pole 21s of the second permanent magnet 21B of the second rotor 19. At the same time, the electric current is supplied to the coil 26D around the core 25D so as to generate an attractive force F4 between the first magnetic pole 27D of the core 25D and the third magnetic pole 20n of the first permanent magnet 20B of the first rotor 18 and to generate an attractive force F4 between the second magnetic pole 28D of the core 25D and the fourth magnetic pole 21s of the second permanent magnet 21B of the second rotor 19.

More specifically, the electric current is supplied to the respective coils 26A, 26B, 26C, 26D in the first direction from the DC power source with the switch being switched to the first energization circuit. The first magnetic poles 27A, 27C and the second magnetic poles 28B, 28D are magnetized with an N-polarity, while the first magnetic poles 27B, 27D and the second magnetic poles 28A, 28C are magnetized with an S-polarity. The repulsive forces F1, F3 and the attractive forces F2, F4 are simultaneously generated. Thus, the rotation shaft 13 is rotatively driven.

Then, the third magnetic poles 20n of the first rotor 18 are respectively brought into opposed relation to the first magnetic poles 27B, 27D of the stator 22 as shown in Fig. 4C, and the fourth magnetic poles 21s of the second rotor 19 are respectively brought into opposed relation to the second magnetic poles 28B, 28D of the stator 22 as shown in Fig. 5C.

In this state, the switch is switched to the second energization circuit to supply the electric current to the coils 26A, 26B, 26C, 26D from the DC power source in the second direction opposite to the first direction, whereby the rotation shaft 13 is further rotated. Thereafter, the direction of the supply of the electric current to the coils 26A, 26B, 26C, 26D is alternately switched between the first and second directions, whereby the rotation shaft 13 is continuously rotated.

On the other hand, as the rotation shaft 13 is rotated, the first and second permanent magnets 20A, 20B; 21A, 21B are rotated together with the rotation shaft 13, whereby the magnetic fluxes interlinking with the respective coils 26A, 26B, 26C, 26D are fluctuated. As a result, an inductive counter electromotive force is generated.

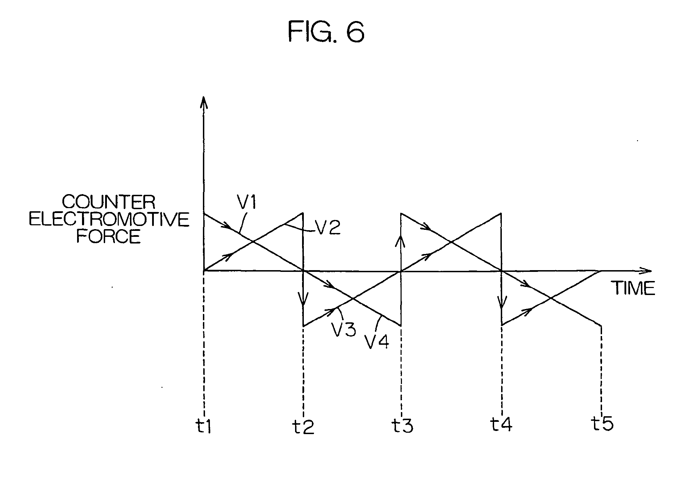

The fluctuation of the interlinkage of the magnetic fluxes from the first permanent magnet 20A observed when the rotation shaft 13 is rotated clockwise at a constant rotation speed will hereinafter be described. In Fig. 6 which illustrates changes of the counter electromotive forces, a time point t1 which corresponds to a state shown in Figs. 4A and 5A and time points t2, t3, t4 and t5 which respectively correspond to states where the rotation shaft 13 is rotated by 90 degrees, 180 degrees, 270 degrees and 360 degrees from the state shown in Figs. 4A and 5A are plotted on the abscissa.

Referring to Figs. 4A and 5A, the first permanent magnet 20A and the second permanent magnet 21A associated with each other are respectively opposed directly to the first magnetic pole 27A and the second magnetic pole 28A of the core 25A. In this state, a magnetic path extending from the first permanent magnet 20A to the second permanent magnet 21A through the core 25A is established, so that magnetic fluxes J from the first permanent magnet 20A entirely interlink with the coil 26A (see Fig. 2).

Referring next to Fig. 4B, the first permanent magnet 20A is moved away from the first magnetic pole 27A toward the first magnetic pole 27B adjacent to the first magnetic pole 27A as the rotation shaft 13 is rotated. Thus, the number of the magnetic fluxes interlinking with the coil 26A is reduced, whereby a counter electromotive force V1 is generated as decreasing in a triangular waveform by the coil 26A as shown in Fig. 6. At the same time, the number of magnetic fluxes interlinking with the coil 26B is increased, whereby a counter electromotive force V2 is generated as increasing in a triangular waveform by the coil 26B.

These counter electromotive forces V1, V2 each occur in a direction opposite to the direction of the electric current supplied by the first energization circuit. In the first energization circuit, a counter electromotive force obtained by combining these two triangular waveforms is generated. The combined counter electromotive force is in a generally constant rectangular waveform, and no torque unevenness occurs.

With the first permanent magnet 20A being directly opposed to the first magnetic pole 27B as shown in Fig. 4C, the magnetic fluxes entirely interlink with the coil 26B (as corresponding to the state at the time point t2 in Fig. 6).

Referring to Fig. 6, during a period from the time point t2 to the time point t3, the number of the magnetic fluxes interlinking with the coil 26B is reduced, while the number of magnetic fluxes interlinking with the coil 26C adjacent to the coil 26B is increased. During this period, the second energization circuit is actuated, so that the direction of the electric current supplied to the respective coils is reversed from that observed during the period from the time point t1 to the time point t2. In the coils 26B, 26C, a counter electromotive force V3 increasing in a triangular waveform and a counter electromotive force V4 decreasing in a triangular waveform are each generated in a direction opposite to the direction of the electric current supplied to the respective coils in the same manner as described above, thereby providing a constant combined counter electromotive force.

As the rotation shaft 13 is further rotated during a period from the time point t3 to the time point t5, magnetic fluxes sequentially interlink with the coils 26C, 26D, 26A, and the numbers of the magnetic fluxes interlinking with the respective coils are changed. During this period, counter electromotive forces in serrate waveforms occur in the respective coils 26C, 26D, 26A. Further, the magnetic fluxes from the first permanent magnet 20B also cause counter electromotive forces like the aforesaid counter electromotive forces. Thus, a combined counter electromotive force is provided in a rectangular waveform in the stator 22, and no torque unevenness occurs.

In this embodiment, the third magnetic poles 20n of the first permanent magnets 20A, 20B of the first rotor 18 each having an N-polarity are sequentially brought into opposed relation to the first magnetic poles 27A to 27D of the stator 22, and the fourth magnetic poles 21s of the second permanent magnets 21A, 21B of the second rotor 19 each having an S-polarity are sequentially brought into opposed relation to the second magnetic poles 28A to 28D of the stator 22 during the rotation of the rotation shaft 13.

Note a relationship between the third magnetic pole 20n of the first permanent magnet 20A of the first rotor 18 and the first magnetic pole 27A of the core 25A which are opposed to each other. When the third magnetic pole 20n and the first magnetic pole 27A are moved relative to each other in substantially opposed relation during the rotation of the rotation shaft 13, the magnetic fluxes J from the first permanent magnet 20A of the first rotor 18 are introduced into the core 25Ahaving the first magnetic pole 27A opposed to the third magnetic pole 20n of the first permanent magnet 20A.

The magnetic fluxes J are generated so as to interlink with the coil 26A in a predetermined direction irrespective of the rotation of the rotation shaft 13, and the number of the magnetic fluxes in the core 25A is changed during the rotation of the rotation shaft 13. Therefore, the loss of the magnetic fluxes is suppressed as compared with the case where the direction of the magnetic fluxes with respect to the coil is changed. As a result, the unevenness of the torque of the electric motor 12 can be suppressed.

The first magnetic poles 27A to 27D of the stator 22 are brought into opposed relation to only the third magnetic poles 20n of the first permanent magnets 20A, 20B of the first rotor 18 each having an N-polarity. The second magnetic poles 28A to 28D of the stator 22 are brought into opposed relation to only the fourth magnetic poles 21s of the second permanent magnets 21A, 21B of the second rotor 19 each having an S-polarity. Therefore, the changes in the number of the magnetic fluxes during the rotation of the rotation shaft 13 are reduced as compared with a case where the first magnetic poles 27A to 27D are alternately brought into opposed relation to an N-pole and an S-pole or a case where the second magnetic poles 28A to 28D are alternately brought into opposed relation to an N-pole and an S-pole. As a result, the unevenness of the torque of the electric motor 12 can be further reduced. Therefore, the steering feeling can be further improved.

In this embodiment, the repulsive forces F1, F3 and the attractive forces F2, F4 simultaneously act on the magnetic poles 20n, 21s of the first and second rotors 18, 19 to accelerate the rotation of the rotation shaft 13, for example, as shown in Figs. 4B and 5B, and a higher torque can be efficiently generated.

Since the magnetic poles 20n, 21s of the first and second rotors 18, 19 each have one of the opposite polarities, inter-leakage of the magnetic fluxes between the magnetic poles 20n and 21s of the rotors 18 and 19 is suppressed, thereby contributing to the generation of the higher torque. Therefore, the steering feeling can be further improved with the higher torque thus provided.

The number of the magnetic poles of the stator 22 is preferably twice the number of the magnetic poles of each of the rotors 18, 19. Thus, the magnetic poles 27A to 27D, 28A to 28D of the stator 22 can continuously apply the repulsive forces F1, F3 and the attractive forces F2, F4 to the magnetic poles 20n, 21s of the corresponding rotors 18, 19. This is advantageous for providing a higher torque.

Referring to Figs. 3A and 3B, the magnetic poles of the rotors 18, 19 and the stator 22 to be brought into opposed relation have substantially the same arcuate length. With this arrangement, rotational magnetic fields are induced sequentially in the cores 25A, 25B, 25C, 25D of the stator 22 according to the positions of the first and second permanent magnets 20A, 20B; 21A, 21B of the first and second rotors 18, 19 during the rotation of the rotation shaft 13. Thus, it is possible to repeatedly cause such a phenomenon that, for example, the number of the magnetic fluxes interlinking with the coil 26A is increased, and at the same time, the number of the magnetic fluxes interlinking with the coil 26B adjacent to the coil 26A is reduced.

As a result, the inductive counter electromotive force caused in the entire stator 22 by the changes in the number of the magnetic fluxes can be kept constant as shown in Fig. 6, and the unevenness of the torque of the rotation shaft 13 can be further reduced. Therefore, the steering feeling can be further improved. In addition, the numbers of the magnetic fluxes occurring in the respective cores 25A, 25B, 25C, 25D are changed in serrate waveforms during the rotation of the rotation shaft 13. Therefore, the numbers of the magnetic fluxes are changed substantially equivalently in the respective coils 26A to 26D, and the unevenness of the torque can be further reduced.

In this embodiment, the problem associated with the conventional electric power steering device using the ordinary DC motor can be solved by employing the single opposed magnetic pole induction motor as the electric motor 12. In this embodiment, since a higher torque can be provided even at a lower speed, the value of the electric current required for the driving of the electric motor 12 can be reduced. This makes it possible to reduce the costs of the driving circuit 31 with the use of less expensive components. Further, the size reduction of the reduction gear mechanism 14 can be achieved by reducing the reduction gear ratio.

Since the torque unevenness can be reduced, there is no need for a control for suppressing the torque unevenness, thereby simplifying the construction of the control section 17. Further, the construction of the electric motor 12 can be simplified by reducing the number of the magnetic poles.

The cores 25A, 25B, 25C, 25D are each composed of the single elongate bar. Therefore, the number of components of the electric motor 12 can be reduced, for example, without a need for the use of a multiplicity of laminate iron plates in the stator 22.

The coil winding method can be simplified by winding the coils 26A, 2 6B, 26C, 2 6D around the longitudinal (L) axes of the cores 25A, 25B, 25C, 25D of the elongate bars. Therefore, a copper loss, an iron loss and a circuit loss of the electric motor 12 can be drastically reduced, thereby increasing the efficiency.

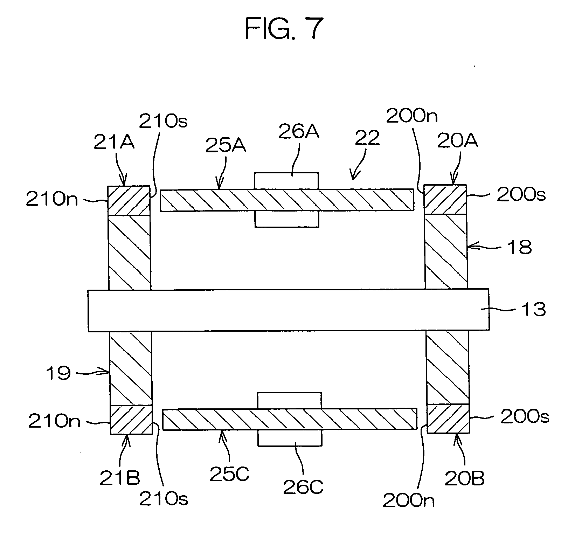

As shown in Fig. 7, it is possible to employ at least one of an arrangement such that third magnetic poles 200n of the first rotor 18 are brought into axially (S) opposed relation to the first magnetic poles 27A to 27D of the cores 25A to 25D of the stator 22 and an arrangement such that fourth magnetic poles 210s of the second rotor 19 are brought into axially (S) opposed relation to the second magnetic poles 28A to 28D of the cores 25A to 25D of the stator 22. Fig. 7 illustrates a construction in which the third and fourth magnetic poles 200n, 210s are respectively brought into axially (S) opposed relation to the first and second magnetic poles 27A to 27D and 28A to 28D. Further, fifth magnetic poles 200s each having a polarity opposite to the polarity of the third magnetic poles 200n and sixth magnetic poles 210n each having a polarity opposite to the polarity of the fourth magnetic poles 210s are provided.

The numbers of the third and fourth magnetic poles 20n, 21s; 200n, 210smayeachbe increased, for example, to three or four. In this case, the number of the cores 25A to 25D of the stator 22 is preferably twice the number of the third or fourth magnetic poles 20n, 21s; 200n, 210s.

The present invention is applicable not only to the column-type electric power steering device but also to an electric power steering device of a type in which an electric motor 12 is disposed coaxially with or in the vicinity of the rack shaft 8 for axially driving the rack shaft 8, and a steer-by-wire steering device employing an electric motor 12.

While the present invention has thus been described in detail by way of the specific embodiments thereof, those skilled in the art who have understood the foregoing will easily come up with alterations, modifications and equivalents of the embodiments. Therefore, the scope of the present invention is to be defined by the following claims and their equivalents.

This application corresponds to Japanese Patent Application No. 2003-200687 filed with the Japanese Patent Office on July 23, 2003, the disclosure of which is incorporated herein by reference in its entirety.

## Claims

1. An automotive steering device comprising:
an electric motor which generates a steering assist force,
wherein the electric motor comprises a rotation shaft, a stator surrounding the rotation shaft, and first and second rotors rotatable together with the rotation shaft,
wherein the stator includes a plurality of cores arranged circularly about the rotation shaft and elongated parallel to an axis of the rotation shaft, and coils respectively wound around the cores,
wherein an electric current is caused to flow through the coils around the respective cores, whereby the cores are each formed with first and second magnetic poles disposed opposite to each other longitudinally thereof and having opposite polarities,
wherein the first rotor has a third magnetic pole having a polarity opposite to the polarity of the first magnetic pole,
wherein the second rotor has a fourth magnetic pole having a polarity opposite to the polarity of the second magnetic pole,
wherein the third and fourth magnetic poles are respectively brought into opposed relation to the first and second magnetic poles of the cores in a same phase during rotation of the rotation shaft, whereby magnetic fluxes interlink with the coils around the cores in predetermined directions longitudinally of the cores.

2. An automotive steering device as set forth in claim 1,
wherein the first rotor includes at least one first permanent magnet having the third magnetic pole, and the first permanent magnet further has a fifth magnetic pole having a polarity opposite to the polarity of the third magnetic pole,
wherein the second rotor includes at least one second permanent magnet having the fourth magnetic pole, and the second permanent magnet further has a sixth magnetic pole having a polarity opposite to the polarity of the fourth magnetic pole.

3. An automotive steering device as set forth in claim 1, wherein the third and fourth magnetic poles respectively include magnetic poles to be brought into radially opposed relation to the first and second magnetic poles with respect to the rotation shaft.

4. An automotive steering device as set forth in claim 3,
wherein the third and fifth magnetic poles of the first permanent magnet include a pair of magnetic poles disposed opposite to each other radially of the rotation shaft,
wherein the fourth and sixth magnetic poles of the second permanent magnet include a pair of magnetic poles disposed opposite to each other radially of the rotation shaft.

5. An automotive steering device as set forth in claim 1,
wherein the third and fourth magnetic poles respectively include magnetic poles to be brought into opposed relation to the first and second magnetic poles longitudinally of the cores.

6. An automotive steering device as set forth in claim 5,
wherein the third and fifth magnetic poles of the first permanent magnet include a pair of magnetic poles disposed opposite to each other in a direction parallel to the axis of the rotation shaft,
wherein the fourth and sixth magnetic poles of the second permanent magnet include a pair of magnetic poles disposed opposite to each other in the direction parallel to the axis of the rotation shaft.

7. An automotive steering device as set forth in claim 1,
wherein a plurality of first permanent magnets are provided which are disposed circumferentially equidistantly about the rotation shaft,
wherein a plurality of second permanent magnets are provided which are disposed circumferentially equidistantly about the rotation shaft.

8. An automotive steering device as set forth in claim 1, wherein a number of the third magnetic poles and a number of the fourth magnetic poles are equal to each other.

9. An automotive steering device as set froth in claim 8, wherein a number of the cores is greater than the number of the third or fourth magnetic poles.

10. An automotive steering device as set forth in claim 8, wherein a number of the cores is twice the number of the third or fourth magnetic poles.

11. An automotive steering device as set forth in claim 1,
wherein the electric current is supplied to the coils around the respective cores alternately in opposite directions, and the directions of the electric current supplied to each two circumferentially adjacent cores around the rotation shaft are opposite to each other,
whereby attractive forces are generated between the first and second magnetic poles of one of the two adjacent cores and the corresponding third and fourth magnetic poles., and repulsive forces are generated between the first and second magnetic poles of the other core and the corresponding third and fourth magnetic poles.
